# EUROPEAN PATENT SPECIFICATION

(11) **EP 0 718 069 B1**
(45) Date of publication and mention of the grant of the patent: **13.05.1998**
(21) Application number: 95309084.2
(22) Date of filing: 13.12.1995
(51) Int. Cl.: B23K 20/12

(54) **Friction welding tooling**
Reibschweisswerkzeug
Outil de soudage par friction

(30) Priority: 23.12.1994 GB 9429177
(43) Date of publication of application: 26.06.1996
(73) Proprietor: ROLLS-ROYCE plc, London, SW1E 6AT (GB)
(72) Inventor: Harris, Frederick John, Hallgreen, Birmingham B20 9EQ (GB)
(74) Representative: Bird, Vivian John

(56) References cited:
- EP-A- 0 397 387
- EP-A- 0 404 531
- EP-A- 0 458 630
- EP-A- 0 513 669
- EP-A- 0 624 418

## Description

The invention concerns friction welding tooling. In particular it relates to a part of the tooling which clamps a component which is to be welded to a separately clamped workpiece.

In the manufacture of BLISK's, integrally bladed discs, and BLUMS's, integrally bladed drums, for gas turbine engines accuracy of location of the blade or blade blank is of prime importance. The blades may be friction welded to the disc as a finished item or as a part-finished item, ie as a blade blank to be subsequently finished by mechanical or chemical machining processes. In either case when the blade (which term is hereinafter used to include a blank) is clamped into a holding cassette it is important that it is accurately-located in the cassette prior to commencement of the welding operation.

The blade cassette or tooling of immediate interest consists of a cassette base member and a demountable cap. The cassette is carried at a distal end of an oscillator arm which produces the friction generating movement and is connected to a weld-pressure generating ram. In order to load a fresh blade into the cassette prior to the commencement of a welding operation the cap is removed, the blade inserted and the cap replaced.

Tooling comprising an arrangement of this kind, in accordance with the prior art portion of claim 1 hereinafter, is described in the published European patent application EP-A-513,669. This document describes friction welding tooling in which a component is clamped between a base and a demountable cap. A gap is maintained between the confronting faces of the cap and the base allowing the cap to be floating so that the whole of the clamping force can be applied to the component. Any misalignment or movement of the blade when the cap is refitted which might result in an error in the orientation of the blade when it is welded is thereby avoided.

However, the positive location of the component may be disturbed during a welding operation as a result of components of forces arising which are perpendicular to the clamping force. This can still lead therefore to errors in the position of the clamped component during the welding procedure itself. The present invention seeks to overcome these drawbacks.

According to the present invention there is provided friction welding tooling comprising clamp means adapted to accurately clamp a component which is to be welded to a workpiece, the clamp means including a base member adapted to accurately locate the component, and a demountable cap adapted to accurately locate on the component and which may be attached to the base member in order to apply a clamp force to the component the cap and base member being spaced apart by a first gap so as to allow the whole of the clamping force to be applied to the component, characterised in that the base member and the cap are also formed with reference faces in a load path between the base and the cap, said reference faces being spaced apart to form a second gap and that in use a spacer member is forcibly inserted into the second gap to render the load path rigid.

Preferably the base member and the cap are formed with V-notch features adapted to engage edges of the component for accurate location. Preferably also the reference faces which form the second gap are non-parallel thus forming a tapering gap and the spacer member for insertion in the gap is wedge shaped.

The invention and how it may be carried into practice will now be described by way of example only with reference to the accompanying drawings, in which:
Figure 1 shows an "end-on" view of the cassette tooling including a demountable cap, viewed in the direction of arrow B in Figure 2, and
Figure 2 shows a "side" view of the cassette tooling of Figure 1, viewed in the direction of arrow A in that drawing.

Referring now to the drawings the friction welding cassette illustrated is adapted for use as part of the tooling and friction wedding apparatus described and illustrated in our co-pending published patent application EP-A-719,614 (having the same priority date of the present invention).

The cassette of the accompanying drawing comprises a cassette base member 2 having a demountable cap 4 which is mounted on the base member 2 to apply a clamp load to a component 6. In this example the component 6 comprises a blade blank, but it might be a finished or part-finished blade, which is to be friction welded to the periphery of a disc (not shown) for a rotary BLISK stage of a gas turbine engine axial flow compressor. A finished or part-finished blade would include a shoulder or platform to provide a substantive feature for clamping purposes. In order to achieve this the cap 4 is arranged to "float" with respect to the cassette base 2 so that the entire clamp force is applied to the component through the cap. The invention has for its principal objective the provision of such a floating cap and means for carrying the loads which arise during various phases of the whole welding operation.

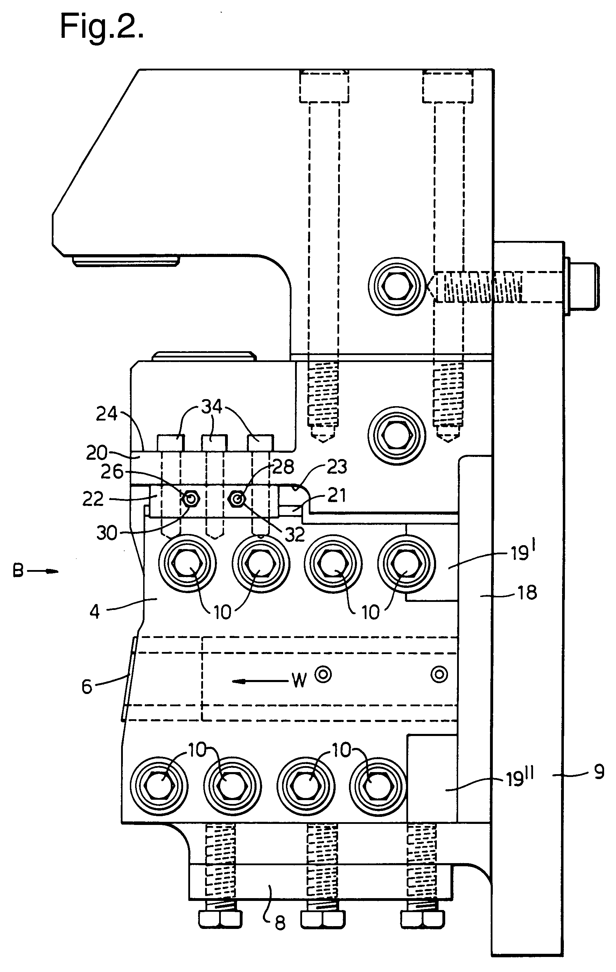

As is described in greater detail in the above mentioned co-pending application the cassette base member 2 is mounted at the distal end of an oscillator arm 8, and a weld-pressure generating force W is applied in the direction indicated by an arrow in Figure 2 by a ram 9.

The component 6 is clamped between confronting faces of the cassette base 2 and the cap 4. The confronting faces consist of complementary arrangements of surfaces which in combination provide the required accurate location of the component and the cap itself. The face of the base member 2 comprises two parallel plane surfaces 12b and 14b which are spaced apart by two unequal angled surfaces 15b and 16b. To match the cross-section of the component with which this piece of tooling is designed to operate the included angle between the faces 15b,16b is a right angle. This right angle extends across the width of the base member thereby constituting a V-notch in which an edge of the component is located.

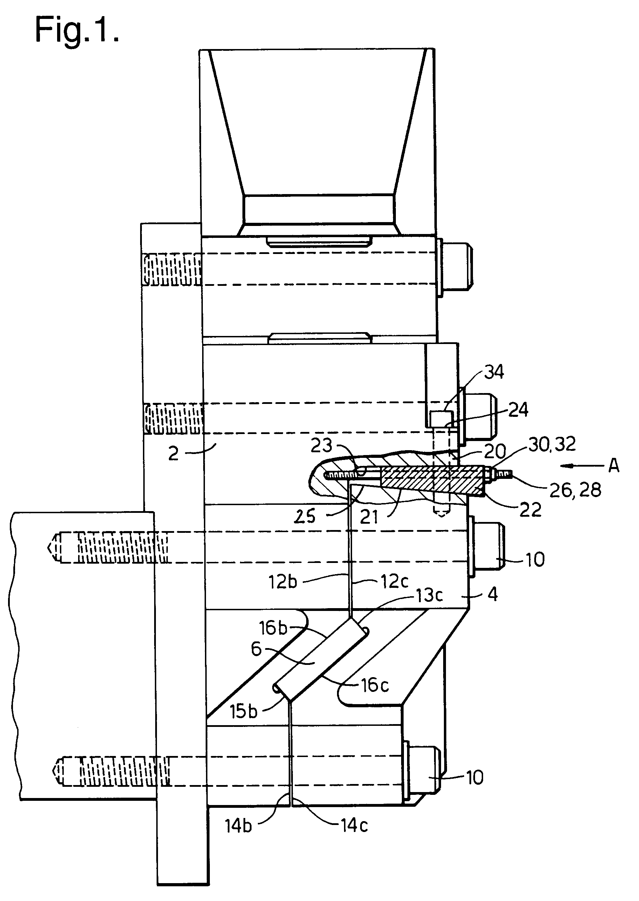

The confronting face of the cap is formed similarly to engage the opposite side of the component. This face also comprises two parallel plane surfaces 12c and 14c spaced apart by two unequal angled surfaces 13c and 16c. Again the included angle between the faces 13c,16c is formed as a right angle to match the component and extends across at least part of the width of the cap thus constituting a V-notch which in this instance is used to locate the cap on the component. This arrangement is best seen in Figure 1.

The dimensions of these faces, in particular the notch faces, of the base and cap are selected so that when the component and cap are in place on the cassette base a narrow gap remains between the parallel faces 12b,12c and 14b,14c. Thus, when the cap 4 is fitted to the cassette base member 2 the whole of the clamping force is applied to the component, or blade blank in the example, which is thereby firmly clamped. If the component is not of uniform rectangular section, ie as in a part-finished or finished blade it is preferred to provide the component with a locating shoulder which is engaged with the notch faces. Thus all forces are exerted through the notch faces and the shoulder portion of the component. In the case of a part finished airfoil blade for a gas turbine engine no forces are exerted through the finished airfoil portion.

The demountable cap 4 is clamped to the base member 2 by means of eight bolts, each of which carries reference 10. Eight clearance holes are drilled through the flanks of the cap 4, see Figure 1 to receive the bolts 10. Preferably bolts 10 include shoulders or thrust washers to bear against the exposed cap face. The clearance holes ensure that the bolts 10 exert no lateral forces on the cap. The cap 4 is located by engagement with the component before the clamp force is applied by tightening the bolts 10 to their holding force. The preferred method of fitting the cap is first to butt it against the backing plate 18, for which purpose a heel is provided at the adjacent edge of the cap comprising two slightly raised regions 19, 19' against which the cap can be pivoted into position on the component or component shoulder.

For reasons explained in the co-pending application vertical forces exist in the cassette during welding and frictional heating phases which also pass through the cap. (In the frame of reference of the drawings a vertical direction extends from the top of the page to the bottom, or vice versa.) In order to avoid movement of the cap thereby disturbing the positive location of the component 6 it is therefore necessary to make some provision in the mounting of cap 4 to carry these forces. Since the cap is floating it follows that in the vertical direction it does not abut any portion of the cassette. In order to provide the required load path the cassette base 2 is formed with a step or shoulder 20 opposite an upper edge 21 of the cap. Direct contact between the shoulder 20 and the edge 21 is avoided by arranging for a gap when the cap is in position. A spacer member or floating wedge 22 is then inserted into the gap and clamped firmly in position thereby providing the load path.

The step 20 has a lower face 23 which forms one side of the gap and has a second, upper face 24 which, with respect to the reference directions, is formed horizontally. Three, in this example, clearance holes are drilled in a perpendicular direction downwardly from face 24 in line with clearance slots in wedge 22 and tapped holes in the cap 4. When the wedge 22 has been inserted into the gap bolts 34 are inserted through these holes and tightened to hold the wedge in place.

Preferably the reference faces 23,25 on the base member and cap respectively are formed non-parallel to ensure that the spacer member 22 can be inserted after the cap has been clamped into the component 6. In the illustrated embodiment the face 23 on the base forms a right angle with plane surface 12b. The surface 25 on the cap, however, slopes downwards; that is the internal angle between that face and face 12c is less than a right angle. Thus, when the cap 4 is clamped in position the faces 23,25 form an inwardly tapering gap. The wedge 22 is formed with correspondingly tapering faces to fit into this gap. A pair of studs 26,28 project outwardly through the gap from two holes drilled and tapped in the face 12b to receive the studs. The wedge 22 is drilled through at the same spacing with clearance holes for the studs. The outer ends of the studs are also tapped to take self-locking nuts 30,32 to apply end load for inserting the wedge.

In use, the sequence of operations to fit the cap 4 to the cassette body 2, having placed the blade in position is: first position cap against the backing plate 18, second insert and tighten bolts 10, and third fit the wedge 20 and locking nuts 30,32. The wedge is first fitted, after the cap, by sliding it onto the studs 26,28 and then forcing it into the gap by tightening the self-locking nuts 30,32. Finally the wedge is held securely by the holding bolts 34.

## Claims

1. Friction welding tooling comprising
clamp means adapted to accurately clamp a component (6) which is to be welded to a workpiece,
the clamp means including a base member (2) adapted to accurately locate the component (6), and
a demountable cap (4) adapted to accurately locate on the component (6) and which may be attached to the base member (2) in order to apply a clamp force to the component the cap (4) and base member (2) being spaced apart by a first gap so as to allow the whole of the clamping force to be applied to the component (6),
characterised in that
the base member (2) and the cap (4) are also formed with reference faces (21,23) in a load path between the base (2) and the cap (4), said reference faces (21,23) being spaced apart to form a second gap and that in use a spacer member (22) is forcibly inserted into the second gap to render the load path rigid.

2. Friction welding tooling as claimed in claim 1 wherein the base member (2) and the cap (4) are formed with V-notch features (15b,16b;13c,16c) adapted to engage edges of the component (6) for accurate location.

3. Friction welding tooling as claimed in claim 1 or claim 2 further characterised in that the reference faces (21,23) are non-parallel to form a tapering gap and the spacer member (22) is wedge shaped.

4. Friction welding tooling as claimed in claim 3 further characterised in that the width of the second gap formed by the reference faces (21,23) progressively decreases with depth.

5. Friction welding tooling as claimed in any preceding claim further characterised in that means (26,28) is provided for inserting the spacer member (22) in the tapering gap and applying a pre-load force.

6. Friction welding tooling as claimed in claim 5 further characterised in that said means (26,28) comprises at least one stud mounted in the base member (2) extending through the gap to engage the spacer member (22) and locate it in said gap.

7. Friction welding tooling as claimed in claim 6 further characterised in that means (34) is provided to apply a clamping load between the base member (2), the cap (4) and the wedge (22) across the wedge gap.

8. Friction welding tooling as claimed in claim 7 wherein said further means (34) comprises a plurality of bolts passing transversely through the wedge (22).

## Patentansprüche

1. Reibschweißvorrichtung, die aufweist:
Einspannorgane, die für ein genaues Einspannen eines Bauteils (6) ausgebildet sind, das an einem Werkstück anzuschweißen ist,
wobei das Einspannorgan einen Grundkörper (2) aufweist, das für eine genaue Positionierung des Bauteils (6) ausgebildet ist, und
eine demontierbare Kappe (4), die zur genauen Positionierung des Bauteils (6) ausgebildet ist, und am Grundkörper (2) befestigt werden kann, um eine Klemmkraft auf das Bauteil auszuüben, wobei die Kappe (4) und der Grundkörper (2) durch einen ersten Spalt einen gegenseitigen Abstand haben, so daß die gesamte Klemmkraft auf das Bauteil (6) ausgeübt werden kann
dadurch gekennzeichnet, daß
der Grundkörper (2) und die Kappe (4) außerdem mit Bezugsflächen (21, 23) im Kraftweg zwischen dem Grundkörper (2) und der Kappe (4) ausgebildet sind, wobei die Bezugsflächen (21, 23) einen Abstand voneinander haben und einen zweiten Spalt bilden, und daß im Gebrauch ein Abstandhalter (22) straff in den zweiten Spalt eingeführt wird, um den Kraftweg starr zu machen.

2. Reibschweißvorrichtung nach Anspruch 1, wobei der Grundkörper (2) und die Kappe (4) mit V-Nuten (15b, 16b; 13c, 16c) ausgebildet sind, die zum Umgreifen der Kanten des Bauteils 6 zur genauen Positionierung ausgebildet sind.

3. Reibschweißvorrichtung nach Anspruch 1 oder 2, weiter dadurch gekennzeichnet, daß die Bezugsflächen (21, 23) nichtparallel sind, um einen konischen Spalt zu bilden, und daß der Abstandhalter (22) keilförmig ist.

4. Reibschweißvorrichtung nach Anspruch 3, weiter dadurch gekennzeichnet, daß die Breite des zweiten Spalts, der durch die Bezugsflachen (21, 23) gebildet ist, mit seiner Tiefe fortschreitend abnimmt.

5. Reibschweißvorrichtung nach einem der vorhergehenden Ansprüche, weiter dadurch gekennzeichnet, daß Mittel (26, 28) zum Einführen des Abstandhalters (22) in den konischen Spalt und zum Ausüben einer Vorspannkraft vorgesehen sind.

6. Reibschweißvorrichtung nach Anspruch 5, weiter dadurch gekennzeichnet, daß die genannten Mittel (26, 28) mindestens einen im Grundkörper (2) montierten Zapfen aufweisen, der durch den Spalt hindurchragt, um den Abstandhalter (22) zu Ergreifen und ihn in dem Spalt zu positionieren.

7. Reibschweißvorrichtung nach Anspruch 6, weiter dadurch gekennzeichnet, daß Mittel (34) vorgesehen sind, um eine Klemmkraft zwischen dem Grundkörper (2), der Kappe (4) und dem Keil (22) über dem Keilspalt anzulegen.

8. Reibschweißvorrichtung nach Anspruch 7, wobei die genannten weiteren Mittel (34) eine Mehrzahl von Bolzen umfassen, die quer durch den Keil (22) hindurchverlaufen.

## Revendications

1. Outillage de soudage par friction comprenant des moyens de serrage adaptés pour serrer avec précision un composant (6) à souder sur une pièce à usiner,lesdits moyens de serrage comprenant un élément de base (2) adapté pour placer avec précision le composant (6), et un couvercle démontable (4) adapté pour être placé avec précision sur le composant (6) et pouvant être fixé à l'élément de base (2) afin d'appliquer une force de serrage au composant, le couvercle (4) et l'élément de base (2) étant séparés par un premier espace afin de permettre à toute la force de serrage d'être appliquée au composant (6), caractérisé en ce que l'élément de base (2) et le couvercle (4) sont également formés avec des faces de référence (21, 23) dans un chemin de charge entre la base (2) et le couvercle (4), lesdites faces de référence (21, 23) étant séparées pour former un second espace, et en ce qu'en cours d'utilisation, un élément formant entretoise (22) est inséré de force dans le second espace pour rendre le chemin de charge rigide.

2. Outillage de soudage par friction selon la revendication 1, caractérisé en ce que l'élément de base (2) et le couvercle (4) sont formés avec des encoches en V (15b, 16b ; 13c, 16c) adaptées pour venir en prise avec des bords du composant (6) pour une mise en place précise.

3. Outillage de soudage par friction selon la revendication 1 ou la revendication 2, caractérisé en ce que les faces de référence (21, 23) ne sont pas parallèles pour former un espace aminci, et l'élément formant entretoise (22) est en forme de clavette.

4. Outillage de soudage par friction selon la revendication 3, caractérisé en ce que la largeur du second espace formé par les faces de référence (21, 23) décroît progressivement en profondeur.

5. Outillage de soudage par friction selon l'une quelconque des revendications précédentes, caractérisé en ce que des moyens (26, 28) sont prévus pour insérer l'élément formant entretoise (22) dans l'espace aminci et appliquer une force de précharge.

6. Outillage de soudage par friction selon la revendication 5, caractérisé en ce que lesdits moyens (26, 28) comprennent au moins un support monté sur l'élément de base (2) s'étendant dans l'espace pour venir en prise avec l'élément formant entretoise (22) et le placer dans ledit espace.

7. Outillage de soudage par friction selon la revendication 6, caractérisé en ce que des moyens (34) sont prévus pour appliquer une charge de serrage entre l'élément de base (2), le couvercle (4) et la clavette (22) sur l'espace de clavette.

8. Outillage de soudage par friction selon la revendication 7, caractérisé en ce que lesdits autres moyens (34) comprennent une pluralité de boulons traversant transversalement la clavette (22).
